# EUROPÄISCHE PATENTANMELDUNG

(11) **EP 0 836 897 A2**
(43) Veröffentlichungstag der Anmeldung: **22.04.1998**
(21) Anmeldenummer: 97117283.8
(22) Anmeldetag: 06.10.1997
(51) Int. Cl.: B21D 5/04

(54) **Verfahren und Vorrichtung zum Herstellen von biege- oder torsionsbelasteten Trägern mit U- oder V-förmigem Profil**

(30) Priorität: 18.10.1996 DE 19642995
(71) Anmelder: THYSSEN INDUSTRIE AG, 45128 Essen (DE)
(72) Erfinder: Harbig, Peter, 33842 Werther (DE); Meiners, Bernhard, 33106 Paderborn (DE); Runte, Klaus, 33615 Bielefeld (DE)
(74) Vertreter: Dahlkamp, Heinrich-Leo

(57) **Zusammenfassung**

Die Erfindung betrifft ein Verfahren und eine Vorrichtung zum Herstellen von biege- oder torsionsbelasteten Trägern mit U- oder V-förmigem Profil, insbesondere für Torsionsprofile von Verbundlenkerachsen oder Längsträgern von Lkws, wobei ein Materialstreifen vorgegebener Länge und Breite von einem Coilmaterial abgeschnitten und zum Träger verformt wird.

Um biege- und torsionsbelastete Träger aus Materialstreifen herzustellen, die geschnittene Längskanten aufweisen und dennoch die gleiche Lebensdauer haben wie Träger aus Materialstreifen mit Naturwalzkanten, soll der Materialstreifen sowohl an seinen Querkanten als auch an seinen Längskanten (2) geschnitten werden und sollen wenigstens die Längskanten (2) gestaucht werden, um Druckeigenspannungen im Bereich der Längskanten (2) zu erzeugen.

## Beschreibung

Die Erfindung betrifft ein Verfahren zum Herstellen von biege- oder torsionsbelasteten Trägern mit großen U- oder V-förmigem Profil, insbesondere für Torsionsprofile von Verbundlenkerachsen oder Längsträger von Lkws, wobei ein Materialstreifen vorgegebener Länge und Weite von einem Coilmaterial abgeschnitten und zum Träger verformt wird. Die Erfindung betrifft auch eine Vorrichtung zur Durchführung des Verfahrens.

Torsionsprofile von Verbundlenkerachsen und auch Längsträger von Lkws sind hochbelastete Bauteile, deren Lebensdauer wesentlich durch Materialeigenschaften im Bereich der Längskanten dieser Träger bestimmt werden. Da im Bereich von geschnittenen Längskanten unvermeidlich Zugspannungen und Mikrorisse vorhanden sind, die bei bestimmungsgemäßen Betrieb des Trägers dessen Lebensdauer beeinträchtigen, werden in der Automobilindustrie ausschließlich Materialstreifen mit sogenannten Naturwalzkanten verwendet. Naturwalzkanten haben im Vergleich zu geschnittenen Kanten keine Zugspannungen und keine Mikrorisse im Bereich der Randfaser. Für die Praxis bedeutet das, daß die Materialstreifen von einem Coilmaterial abgeschnitten werden, dessen Breite der Breite des Materialstreifens entspricht. Derartiges, auf die Breite des Materialstreifens abgestimmtes Coilmaterial ist teuer.

Aufgabe der Erfindung ist es, ein Verfahren und eine Vorrichtung zur Herstellung von biege- und torsionsbelasteten Trägern aus Materialstreifen herzustellen, die geschnittene Längskanten aufweisen und dennoch etwa die gleiche Lebensdauer haben wie Träger aus Materialstreifen mit Naturwalzkanten.

Diese Aufgabe wird dadurch gelöst, daß der Materialstreifen sowohl an seinen Querkanten als auch an seinen Längskanten geschnitten wird und daß wenigstens die Längskanten gestaucht werden, um Druckeigenspannungen im Bereich der Längskanten zu erzeugen. Insbesondere können aus einem Coilmaterial großer Breite mehrere Materialstreifen kleiner Breite geschnitten werden. Durch das Stauchen werden nicht nur die Oberflächen der Schnittkanten geglättet und werden eventuell vorhandene Mikrorisse kaltverschweißt, es werden im Bereich der Schnittkante auch Druckeigenspannungen erzeugt, die die Lebensdauer erhöhen. Die Druckeigenspannungen wirken darüber hinaus gleichsam als Bremse gegen das weitere Reißen von nicht verschweißten Mikrorissen.

Als bevorzugte Ausführung der Erfindung sollen Längsrillen in einem Abstand von ca. der halben Materialdicke zu den Längskanten eingepreßt werden. Die Längsrillen begrenzen den Stauchbereich und dadurch den Bereich der induzierten Druckeigenspannungen. Sie können innenseitig und/oder außenseitig in den Materialstreifen eingepreßt werden.

In der Praxis bewährt es sich, wenn die Längskanten im wesentlichen orthogonal zur Ebene des Materialstreifens oder der U- bzw. V-Schenkel des geformten Trägers gestaucht werden. Eine Vorrichtung zur Durchführung des Verfahrens ist mit Widerlagern mit zugeordnetem Niederhalter für den Materialstreifen oder einen Schenkel des U- oder V-förmigen Trägers und einem Preßwerkzeug zum Stauchen der Längskante des zwischen Widerlager und Niederhalter eingespannten Bauteils ausgerüstet. Insbesondere kann das Preßwerkzeug einen langgestreckten Vorsprung zum Einpressen der Längsrille und davon ausgehend eine langgestreckte Stauchfläche aufweisen, wobei das Preßwerkzeug im wesentlichen orthogonal zur Ebene des eingespannten Bauteils bewegbar ist. Damit das Material nicht nur orthogonal zur Ebene des eingespannten Bauteils, sondern auch in der Ebene des eingespannten Bauteils gestaucht wird, sollte die Stauchfläche einen langgestreckten Abschnitt aufweisen, der sich unter einem Winkel zur Ebene des eingespannten Bauteils erstreckt. Dadurch werden auch die Kanten der geschnittenen Längskanten gebrochen.

Im folgenden wird ein in der Zeichnung dargestelltes Ausführungsbeispiel der Erfindung erläutert; Es zeigen:
- Figur 1: schematisch den Querschnitt eines V-förmigen Torsionsprofils für eine Verbundlenkerachse,
- Figur 2: schematisch einen Schnitt durch eine Vorrichtung zur Herstellung des Profils nach Figur 1.

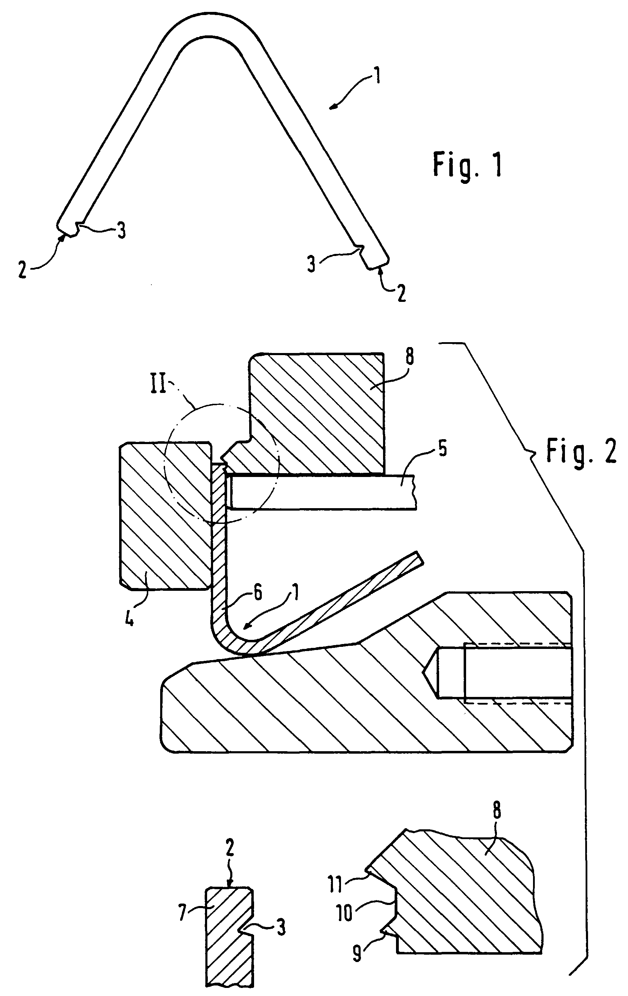

Das in Figur 1 wiedergegebene Torsionsprofil 1 aus Stahl wird hergestellt aus einem ebenen Materialstreifen, der aus Coilmaterial ausgeschnitten ist. Das Coilmaterial kann so breit sein, daß mehrere Materialstreifen nebeneinander aus dem Coilstreifen ausgeschnitten werden können. Ebenfalls sind die Längskanten 2 des Torsionsprofils 1 geschnitten.

Vor oder nach dem Umformen des Materialstreifens zu dem dargestellten Torsionsprofil 1 werden die Längskanten 2 gestaucht. Dazu werden in den Materialstreifen mit kleinem Abstand von den Längskanten 2 Längsrillen 3 eingepreßt und dabei oder danach die Längskanten 2 gestaucht. Die Längsrillen können innenseitig oder außenseitig am Torsionsprofil 1 eingepreßt werden. Der Abstand der Längsrillen 3 von den geschnittenen Längskanten sollte etwa die Hälfte der Dicke des Materialstreifens betragen. Durch das Stauchen werden die Oberflächen der geschnittenen Längskanten 2 geglättet, werden eventuell vorhandene Mikrorisse kalt verschweißt und werden Druckeigenspannungen im Bereich der Längskanten 2 sowie Längsrillen 3 erzeugt, durch die die Lebensdauer des Torsionsprofils 1 im Vergleich mit einem Torsionsprofil, dessen Längskante nicht behandelt worden sind, wesentlich erhöht wird.

Zu der in Figur 2 schematisch wiedergegebenen Vorrichtung gehört ein Widerlager 4, zwischen dem und einem orthogonal dazu beweglichen Niederhalter 5 das Bauteil, bei der dargestellten Ausführung ein V-Schenkel, des bereits aus dem Materialstreifen geformten Torsionsprofils 1 so eingespannt wird, daß ein an die geschnittene Längskante 2 anschließender Stauchbereich 7 vom Niederhalter 5 freibleibt. Zur Vorrichtung gehört ferner ein Preßwerkzeug 8, das orthogonal zur Ebene des eingespannten Bauteils bewegbar ist. Das Preßwerkzeug 8 weist einen langgestreckten Vorsprung 9 zum Einpressen der Längsrille 3 und eine vom Vorsprung 9 ausgehende langgestreckte Stauchfläche 10 auf, zu der auch ein langgestreckter Abschnitt 11 gehört, der sich unter einem Winkel zur Ebene des eingespannten Bauteils erstreckt.

Wird das Preßwerkzeug 8 gegen den freiliegenden, an die geschnittene Längskante 2 anschließenden Abschnitt des eingespannten Bauteils bewegt, wird einerseits die Längsrille 3 eingepreßt und andererseits der freiliegende Abschnitt gestaucht, wobei gleichzeitig Kanten der geschnittenen Längskanten 2 gebrochen werden.

### Bezugszeichenliste

- (1): Torsionsprofil
- (2): Längskanten
- (3): Längsrillen
- (4): Widerlager
- (5): Niederhalter
- (6): V-Schenkel
- (7): Stauchbereich
- (8): Preßwerkzeug
- (9): Vorsprung
- (10): Stauchfläche
- (11): Abschnitt

## Patentansprüche

1. Verfahren zum Herstellen von biege- oder torsionsbelasteten Trägern mit U- oder V-förmigem Profil, insbesondere für Torsionsprofile von Verbundlenkerachsen oder Längsträgern von Lkws, wobei ein Materialstreifen vorgegebener Länge und Breite von einem Coilmaterial abgeschnitten und zum Träger geformt wird, **dadurch gekennzeichnet,** daß der Materialstreifen sowohl an seinen Querkanten als auch an seinen Längskanten (2) geschnitten wird und daß wenigstens die Längskanten (2) gestaucht werden, um Druckeigenspannungen im Bereich der Längskanten (2) zu erzeugen.

2. Verfahren nach Anspruch 1, **dadurch gekennzeichnet,** daß aus einem Coilmaterial großer Breite mehrere Materialstreifen kleiner Breite geschnitten werden.

3. Verfahren nach Anspruch 1 oder 2, **dadurch gekennzeichnet,** daß in den Materialstreifen mit kleinem Abstand von den Längskanten (2) Längsrillen (3) eingepreßt werden und dabei oder danach die Längskanten (2) gestaucht werden.

4. Verfahren nach einem der Ansprüche 1 bis 3, **dadurch gekennzeichnet,** daß die Längsrillen (3) in einem Abstand von ca. der halben Materialdicke zu den Längskanten (2) eingepreßt werden.

5. Verfahren nach einem der Ansprüche 1 bis 4, **dadurch gekennzeichnet,** daß die Längskanten (2) im wesentlichen aus orthogonal zur Ebene des Materialstreifens oder der U- bzw. V-Schenkel des geformten Trägers gestaucht werden.

6. Vorrichtung zur Durchführung des Verfahrens nach einem der Ansprüche 1 bis 5 mit einem Widerlager (4) mit zugeordnetem Niederhalter (5) für den Materialstreifen oder einen Schenkel (6) des U- oder V-förmigen Trägers und mit einem Preßwerkzeug (8) zum Stauchen der Längskante (2) des zwischen Widerlager (4) und Niederhalter (5) eingespannten Bauteils.

7. Vorrichtung nach Anspruch 6, **wobei** das Preßwerkzeug (8) einen langgestreckten Vorsprung (9) zum Einpressen der Längsrillen (3) und davon ausgehend eine langgestreckte Stauchfläche (10) aufweist, **wobei** das Preßwerkzeug (8) im wesentlichen orthogonal zur Ebene des eingespannten Bauteils bewegbar ist.

8. Vorrichtung nach Anspruch 6 oder 7, **wobei** die Stauchfläche (10) einen langgestreckten Abschnitt (11) aufweist, der sich unter einem Winkel zur Ebene des eingespannten Bauteils erstreckt.
